# EUROPÄISCHE PATENTSCHRIFT

(11) **EP 0 590 487 B1**
(45) Veröffentlichungstag und Bekanntmachung des Hinweises auf die Patenterteilung: **21.05.1997**
(21) Anmeldenummer: 93115244.1
(22) Anmeldetag: 22.09.1993
(51) Int. Cl.: G01N 21/85, G01N 21/53, G01N 21/15

(54) **Vorrichtung zur Trübungsmessung in wässrigen Messmedien**
Device for turbidity measurement in aqueous media
Appareil pour mesurer la turbidité en milieu aqueux

(30) Priorität: 02.10.1992 DE 4233218
(43) Veröffentlichungstag der Anmeldung: 06.04.1994
(73) Patentinhaber: ENDRESS + HAUSER CONDUCTA GESELLSCHAFT FÜR MESS UND REGELTECHNIK mbH & Co., D-70839 Gerlingen (DE)
(72) Erfinder: Seefeld, Peter, Dipl.-Chem., D-74206 Bad Wimpfen (DE)
(74) Vertreter: Otte, Peter, Dipl.-Ing.

(56) Entgegenhaltungen:
- EP-A- 0 017 007
- EP-A- 0 337 108
- US-A- 3 714 444

## Beschreibung

### Stand der Technik

Die Erfindung geht aus von einer Vorrichtung nach dem Oberbegriff des Anspruchs 1, die sich allgemein zur Erfassung von ein Primärsignal durch ihre Anwesenheit verändernden Einflußgrößen in der analytischen Chemie eignet und speziell auf den Bereich der Trübungsmessung in wäßrigen Meßmedien gerichtet ist. Verfahren und Vorrichtung, die über die Wasserbeschaffenheit Auskunft geben, also speziell dessen Trübung bestimmen, sind in vielfältiger Form bekannt, wobei allgemein verwiesen werden kann auf die Veröffentlichung DIN 38 404 Teil 2.

Trübung entsteht in Flüssigkeiten durch die Anwesenheit ungelöster Stoffe, wobei die durch solche ungelösten feindispersen Stoffe erzeugte Trübung entweder durch die Schwächung der Intensität einer durch die Flüssigkeit durchgehenden Strahlung oder der Intensität des durch die Trübung hervorgerufenen gestreuten Lichts gemessen werden können, wobei die Streuung der Strahlung eine Eigenschaft von Flüssigkeiten ist und zur Trübungsmessung angewendet werden kann.

Die nachfolgenden Erläuterungen sowie die spezielle Beschreibung der Erfindung beschäftigen sich hauptsächlich mit einer solchen Streuungsmessung, wobei angestrebt wird, daß der von einem optischen Sender ausgehende, in das Meßmedium eindringende Strahl, beispielsweise Infrarotstrahlung, sich mit dem Empfängerstrahl, also der Strahlrichtung, in welcher gestreutes Licht beispielsweise auf eine Empfangs-Fotodiode gelangt, unter Einbeziehung der Brechungsverhältnisse bei etwa 90° kreuzt. Die Wellenlänge der Meßstrahlung liegt dabei üblicherweise bei 880 nm.

Bekannte Trübungsmeßvorrichtungen koppeln dabei üblicherweise das Nah-Infrarotstreulicht mit Hilfe zylindrischer Glasprismen ein und aus, in denen sich wiederum in geeigneter Positionierung die Sendediode bzw. die Empfangsdiode befinden. Die Glasprismen sind ihrerseits in einer Endplatte eines üblicherweise rohrförmigen, also zylindrischen Sensorkörpers eingebettet, wobei die Endplatte den zylindrischen Sensorkörper nach Art einer Kappe horizontal verschließt.

Um zu der gewünschten 90°-Überkreuzung von Sende- und Empfangsstrahl zu gelangen, sind die Glasprismen in der Endplatte gegeneinanderstehend in einem vorgegebenen Winkel positioniert, der üblicherweise aber weniger als 90° beträgt, so daß sich unter Einbeziehung der Brechungsverhältnisse beim Medienübergang innerhalb des Meßmediums effektiv ein 90°-Winkel zwischen Sende- und Empfangsstrahl ergibt.

Hierbei ist es ferner bekannt, den gesamten Sensor bei seinem Einbau in eine Meßanordnung unter einem bestimmten Anstellwinkel zu montieren, um Verschmutzungen und Anbackungen, beispielsweise bei Einströmungen zu vermeiden, was allerdings eine aufwendige Verrohrung unter Einschluß von Y-Stücken erforderlich macht, damit es gelingt, den gesamten Sensor in seiner Einbauarmatur schräg zu halten. Probleme können sich durch die notwendige Schrägstellung des Sensors ferner dadurch ergeben, daß trotz einer in diesem Falle dann notwendigen räumlichen Aufweitung des Durchflußgefäßes stets ein bestimmter Anteil an rückreflektierter Strahlung auftritt, der also nicht auf Streuung zurückzuführen ist.

Da aber andererseits gerade aufgrund der angestrebten Meßbedingungen (beispielsweise hat bei dem angestrebten 90°-Winkel die Strahlungsrichtungsempfindlichkeit ein Minimum, wobei hier auch noch die Frequenz des Meßstrahls eine Rolle spielt) an minimalen Streueffizienzpunkten gemessen werden muß, können solche störenden Rückreflexionen die Meßgenauigkeit unter Umständen erheblich beeinflussen.

In diesem Zusammenhang ist es auch bekannt, gerade weil auch Messungen in Gewässern mit größerer Trübung durchgeführt werden müssen, bei denen auch Strömungseinflüsse auftreten, die Austrittsfenster von Sende- und Empfangsstrahl am Sensorkörper bzw. an dessen Endplatte durch eine Art Wischerfunktion wiederholt zu reinigen, wozu üblicherweise ein Wischarm Verwendung findet, der auf der Ausgangsachse eines ebenfalls im Sensorgehäuse angeordneten Antriebsmotors sitzt und über die Fenster der Empfangs- und Sendediode bzw. der Apparaturöffnungen der Meßprismen eine Reziprokbewegung durchführt.

Um die Wischerfunktion steuern zu können, ist es bekannt, die Position des Wischers über die ohnehin notwendige Empfangsdiode durch das Empfangsprismen-Fenster zu detektieren. Dies ist allerdings deshalb problematisch, weil sich hierdurch eine Abhängigkeit vom Verschmutzungsgrad ergibt mit einer entsprechenden Störanfälligkeit; ein völlig verschmutztes Fenster führt notwendigerweise zur gestörten Wischerfunktion, d.h. daß das Fenster selbst möglicherweise nicht mehr kontrolliert gereinigt werden kann. Darüber hinaus könnte eine aus einer solchen Störung resultierende Fehlplazierung des Wischers neben der Ruheposition im Meßstrahlengang zu Fehlmessungen selbst führen.

In diesem Zusammenhang ist es auch schon bekannt, auf der Wischer-Antriebsachse, die im Sensorkörper eingebettet ist, mit Hilfe von LED- und Fotodioden eine Lichtschrankeneinrichtung anzuordnen, die die Steuerung des Wischermotors übernimmt. Eine solche Lagekontrolle mittels einer Lichtschrankenbeschaltung auf der Wischerantriebsachse im Sensorkörper birgt allerdings als Unsicherheit die mangelnde Kontrolle einer stabilen Fixierung und relativen Plazierung des Wischerarms selbst zur Antriebsachse, und nur darauf kommt es an.

Der Erfindung liegt daher die Aufgabe zugrunde, die eingangs genannte Vorrichtung, die sich speziell zur Trübungsmessung in wäßrigen Meßmedien eignet, so auszubilden, daß schwach und stark streuende Medien mit gleichem Erfolg und hoher Sensorempfindlichkeit gemessen werden können, wobei gleichzeitig ein verschmutzungsunempfindlicher, mechanisch kompakter und stoßgeschützter Sensoraufbau erreicht wird.

### Vorteile der Erfindung

Die Erfindung löst diese Aufgabe mit den Merkmalen des Anspruchs 1 und hat den Vorteil, daß bei hervorragender Empfindlichkeit über den gesamten Meßbereich eine sichere Handhabung und geringe Wartung gegeben ist, wobei insbesondere auch der stoßgeschützte Sensoraufbau durch die schräggesetzte Endplatte im rohrförmigen Sensoraufbau von Bedeutung ist. Durch die Schrägstellung sind nämlich die sich in der Endplatte befindenden Wirkungskomponenten wie Fenster für Empfangs- und Sendeprisma und insbesondere der Wischerarm mit seiner Wischerachse gegen Stöße oder das Aufprallen des Sensors beim Einsetzen in eine Meßapparatur auf deren Boden sicher geschützt.

Dabei stellt die spezielle Steuerung für die Wischerarmbewegung der Reinigungseinrichtung sicher, daß der Wischerarm niemals über den Fenstern für Sende- und Empfangsdiode stehen bleiben kann, sondern stets auf eine vorgegebene Ruheposition zurückläuft, die zur Vermeidung von Rückstreuungen bevorzugt auf der Sendeseite vor der Sendediode bzw. dessen zugeordnetem Sendeprismafenster befindlich ist, wobei der Sendestrahl zur gegenüberliegenden Seite austritt.
Die spitzwinklige Ausformung der sich verjüngenden Randkante im Sensorkopfbereich dient nicht nur dazu, daß es nunmehr möglich ist, den eigentlichen rohrförmigen Sensorkörper in der üblichen Weise senkrecht durch Verwendung allgemein unkomplizierter Einbauarmaturen (rechtwinklige T-Stücke) einzubauen, sondern ermöglicht auch die problemlose Positionierung so, daß die Endplattenfläche leeseitig, d.h. auf der zu einer eventuell vorhandenen Strömung abgewandten Seite angeordnet werden kann, so daß schon aufgrund einer solchen Einbauposition größeren Verschmutzungen entgegengewirkt wird.

Dabei ist ferner von besonderem Vorteil, daß durch die einfache Einbauform mittels rechtwinkliger T-Stücke, bei Kläranlagen also Einbau beispielsweise über ein senkrechtes Tauchrohr ohne gewinkelte Ansatzstücke, neben der Vermeidung von Schmutzabsetzungen auch aufkommende Luftblasen in der gleichen Weise abperlen können, nämlich an der schrägen Sensorendplatte nach oben, ohne daß hierzu ein Anwinkeln des gesamten Sensorkörpers notwendig wird.

Es ist ferner nicht mehr notwendig, übliche Rohrleitungen, in denen das Sensortauchrohr montiert wird, mit Ausbauchungen zu versehen, die lediglich zu störenden Rückreflexionen führen können; im Gegenteil wirken übliche Rohrleitungen, in welche der rohrförmige Sensorkörper senkrecht mit einfachem T-Stück eingeführt werden kann, als Lichtfalle für den Sendestrahl, so daß sowohl komplizierte Installationsmaßnahmen vermieden sind als auch störende Reflexionen gar nicht auftreten können.

Durch die in den Unteransprüchen aufgeführten Maßnahmen sind vorteilhafte Weiterbildungen und Verbesserungen der Erfindung möglich. Besonders vorteilhaft ist die Anordnung der Fenster für Sende- und Empfangsprisma, die wiederum die Sendediode und die Fotodiode enthalten, in der unteren Hälfte der schrägen Endplatte, so daß sich eine optimale Reinigung über den Wischerarm ergibt und dennoch der Stoßschutzeffekt durch die schräge Endplatte sich sowohl auf die Fenster von Sende- bzw. Empfangsprisma auswirkt als auch, wie weiter vorn schon erwähnt, ein besonders wirksamer Stoßschutz mit Bezug auf die Wischerachse erzielt werden kann.

Eine weitere Ausgestaltung der Erfindung besteht darin, daß die üblicherweise zylindrischen Prismen, die die Sende-LED und die Empfangs-Fotodiode enthalten, dort, wo sie einander gegenüberstehen, seitlich abgeflacht sind, d.h. eine Seite der zylindrischen Prismen ist abgeschliffen, wodurch es gelingt, diese mit ihren Zentren höherer Strahlungsdichte näher zusammenzubringen, was speziell Vorteile hinsichtlich des Meßverfahrens selbst sichert. So werden, bedingt durch eine solche Prismengestalt, selbst reduzierte effektive optische Weglängen, die sich beim Vorliegen von hohen Trübstoffgehalten einstellen, anteilig besser mit der Anregungs- und Detektionsapertur erfaßt, wobei gleichzeitig die erzielten Strahlungsdichteverteilungen bei mittleren (40 - 1000 FTE) und bei niedrigen (0 - 40 FTE) Trübungsgehalten einwandfreie Ausleuchtungseffekte im Aperturbereich gewährleisten, zur deutlichen Detektion selbst von Spurentrübungen (0 ... 0,2 FTE). Tatsächlich sächlich ergibt sich durch die zugrunde gelegte seitlich abgeschliffene Prismengestalt eine Kompensation von störenden Reabsorptionseffekten beim Vorliegen von Meßmedien mit Trübstoffgehalten größer als 2000 FTE. Insgesamt resultiert so eine Einsatzfähigkeit des Sensors in einem Meßbereich von 0,01 - 4000 FTE und höher, was sowohl meßtechnisch als auch rechnerisch unter Zugrundelegung der effekten Eindringtiefen bei schwach und stark streuenden Medien nachgewiesen werden kann.

### Zeichnung

Ausführungsbeispiele der Erfindung sind in der Zeichnung dargestellt und werden in der nachfolgenden Beschreibung näher erläutert. Es zeigen:
- Fig. 1: in einer Ansicht schräg von unten perspektivisch als Ausschnitt den unteren Teil des Trübungssensors mit schräg angesetzter Endplatte, wobei auch die Reinigungseinrichtung und die Fenster von optischem Sender und optischem Empfänger erkennbar sind;
- Fig. 2: in Draufsicht die Endplatte des Trübungssensors mit Wischarm, Wischarmlagerachse und Fenstern;
- Fig. 3: in einer Längsdarstellung den unteren Abschnitt des rohrförmigen Sensorkörpers mit schräg angesetzter Endplatte und Darstellung des Antriebsmotors für die Reinigungseinrichtung;
- Fig. 4: schematisiert perspektivisch die Relativpositionierung von Sende- und Empfangsprisma zueinander mit einander zugewandten abgeschliffenen Seiten;
- Fig. 5: einen Schnitt durch die Lagerung von Sende- und Empfangsprisma mit zusätzlicher Leistungskontrolldiode in der Endplatte;
- Fig. 6: eine bevorzugte Ausführungsform der elektrischen Verschaltung des Antriebsmotors für den Wischerarm der Reinigungseinrichtung mit darunter angeordnetem Zeitdiagramm der Motoransteuerspannung und
- Fig. 7: eine mögliche Einbauform des Trübungssensors in einem Rohrstück mit vereinfachter Einbauarmatur als rechtwinkliges T-Stück.

### Beschreibung der Ausführungsbeispiele

Der Grundgedanke vorliegender Erfindung besteht darin, bei einem rohrförmigen Sensorkörper für die Trübungsmessung in wäßrigen oder sonstigen flüssigen Meßmedien die Endplatte schräg zur Längsachse des Sensorkörpers anzuordnen, so daß sich nicht nur ein wirksamer Stoßschutz- und falls gewünscht, Strömungsschutz für die Fenster von Sende- und Empfangsstrahl sowie für den Wischerarm und dessen Achslagerung ergeben, sondern auch hinsichtlich der Meßfunktion selbst Vorteile erzielt werden, beispielsweise Abperlen von Luftblasen und eine Lichtfallenkonstellation bei Einbau in üblichen Rohrleitungen oder an sonstiger Stelle.

Dabei ist weiterhin die spezielle Art des seitlichen Anschliffs der beiden, jeweils die Sende-LED bzw. die Empfangsfotodiode enthaltenden Sende- und Empfangsprismen von Bedeutung sowie die Art der Ausbildung und Lagerung der Wischerarmachse und deren Betätigung durch einen speziellen Motorantrieb.

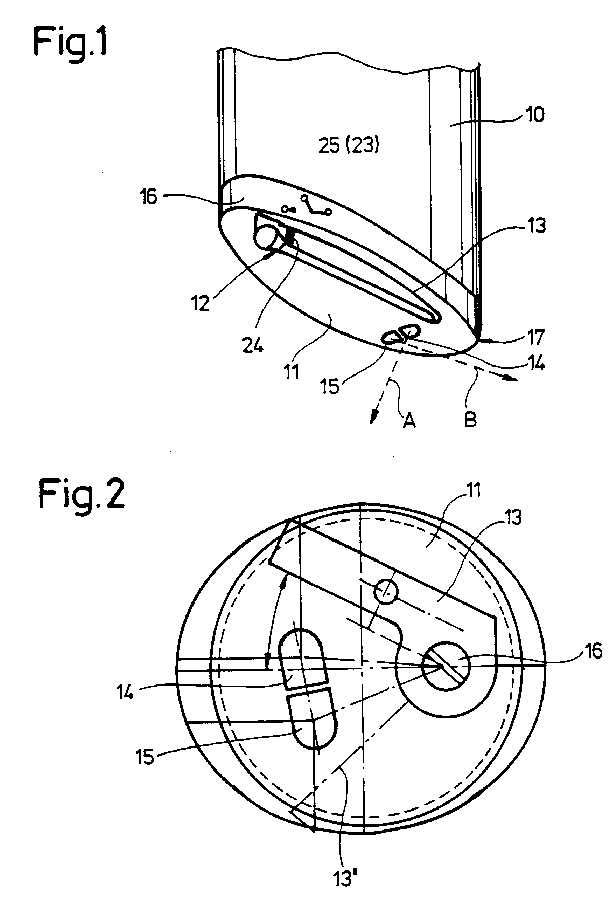

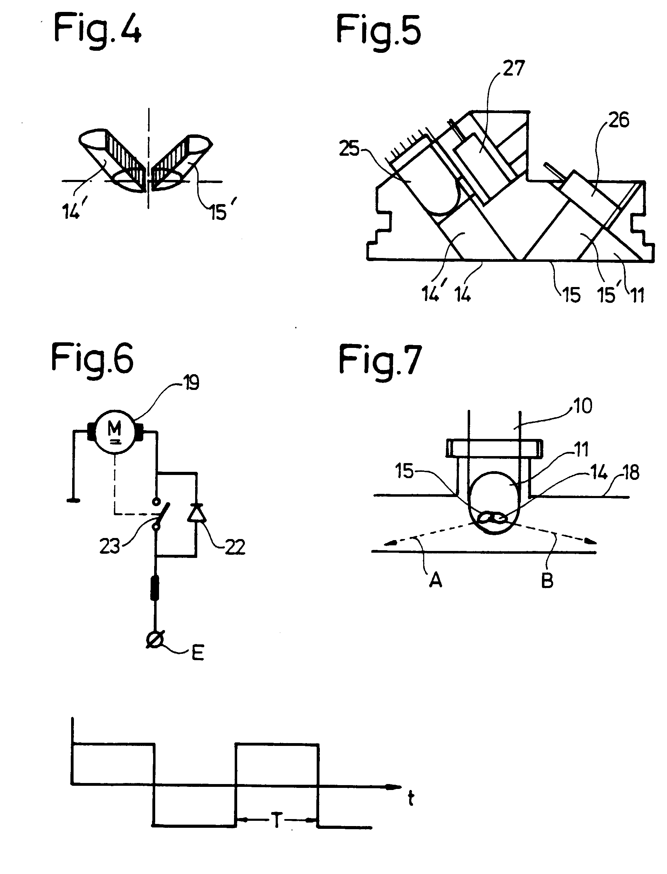

In Fig. 1 ist der Sensorkörper in Form eines nur teilweise dargestellten, beispielsweise zylindrischen Rohres mit 10 und die an das untere Ende des Rohres schräg angesetzte Endplatte mit 11 bezeichnet. Die Endplatte lagert bzw. kann jedenfalls lagern wesentliche Teile der Reinigungseinrichtung 12 für die Fenster für die optische Meßwertgewinnung, die sich im Überdeckungsbereich eines Wischarms 13 befinden, der von einer die Endplatte 11 durchsetzenden und vorzugsweise in dieser gelagerten Achse 14 getragen ist. In Fig. 1 ist ein Sendefenster mit 14 und ein Empfangsfenster mit 15 bezeichnet; Sende- und Empfangsfenster können Durchbrechungen in der Endplatte sein und bestehen üblicherweise aus den Endflächen von in der Endplatte 11 eingebetteten Sende- und Empfangsprismen 14' bzw. 15' (siehe Fig. 4), in denen sich ihrerseits in geeigneter Positionierung ein optischer Sender, üblicherweise eine im Infrarotbereich arbeitende Leuchtdiode sowie eine Fotodiode auf der Empfangsseite befinden.

Die Prismen 14', 15' dienen dabei der Strahlenleitung und sind mit Vorzug so ausgebildet und positioniert, wie in perspektivischer Darstellung in Fig. 4 gezeigt, d.h. jedes der Prismen weist eine seitliche Abflachung (anstelle einer ansonsten üblichen kreisrunden Konfiguration) auf, wobei diese Abflachung, die man durch das Abschleifen einer Zylinderseite gewinnen kann, jeweils so positioniert wird, daß sich die Abflachungen gegenüberliegen und Sende- und Empfangsprisma 14', 15' sich mit ihren abgeflachten, in der Zeichenebene der Fig. 4 unteren Kanten im engen Abstand zueinander angeordnet finden, während sich die Zylinderkörper zunehmend im Winkel nach oben voneinander entfernen. Diese in Fig. 4 gezeigte Position von Sende- und Meßprisma 14', 15' ist auch die Position, in welcher die beiden Prismen in der Endplatte 11 eingebettet sind, wobei der Winkel zwischen den flachen Seiten der abgeflachten Prismen so bemessen ist, daß sich für den mit A bezeichneten Sendestrahl sowie den mit B bezeichneten Empfängerstrahl unter Einbeziehung der Brechungsverhältnisse an den Übergangsbereichen innerhalb des Meßmediums so genau wie möglich eine 90°-Beziehung ergibt.

Durch die seitlichen Abflachungen der beiden Prismen ist es, wie aus der Fig. 4 ohne weiteres zu erkennen, möglich, die Zentren höherer Strahlungsdichten der beiden Prismen näher aneinander zu bringen, so daß,
bedingt durch diese Prismengestalt, selbst reduzierte effektive optische Weglängen, die sich beim Vorliegen von hohen Trübstoffgehalten einstellen, anteilig besser mit den so gebildeten Anregungs- und Detektions-Aperturen (Fenster) erfaßt werden können. Gleichzeitig gewährleisten die erzielten Strahlungs-dichteverteilungen bei dieser Konfiguration sowohl bei mittleren (40 - 1000 FTE) und niedrigen (0 - 40 FTE) Trübungsgehalten hervorragend geeignete Ausleuchtungseffekte im Aperturbereich, die auch eine deutliche Detektion selbst von Spurentrübungen (0 ... 0,2 FTE) ermöglichen.

Die erzielten höheren Strahlungsdichten ermöglichen ferner die Kompensation von störenden Reabsorptionseffekten beim Vorliegen von Meßmedien mit hohen Trübstoffgehalten, die größer als 2000 FTE sind. Insgesamt ergibt sich allein durch eine solche Konfiguration eine Einsatzfähigkeit eines Trübstoffsensors mit einem Meßbereich von 0,01 - 4000 FTE.

Aus der Darstellung der Fig. 1 in Verbindung mit der Fig. 2 wird auch erkennbar, daß sich die Aperturen oder Fenster für Sende- und Empfangsprisma 14', 15' in der einen, mit Bezug auf die Neigung der Endplatte 11 unteren Endplattenhälfte befinden, während die Lager- und Antriebsachse 16 für den Wischerarm 13 in der oberen Hälfte der Endplatte 11 angeordnet ist. Hierdurch ergeben sich einwandfreie Wisch- und Reinigungsverhältnisse, wobei gerade die schräge Positionierung der Endplatte einen wirksamen Stoßschutz für Wischerarm und Wischerachse ermöglicht, denn beim normalerweise senkrechten Einbau des Sensorkörpers 11 (was im übrigen gerade durch die Schrägstellung der Endplatte möglich ist, worauf weiter unten noch eingegangen wird) schützt natürlich die untere, sich verjüngende Randkante 17 sowohl die ebenfalls schon insofern höher liegenden Fenster 14, 15 als auch die Achse und den Wischerarm der Reinigungseinrichtung wirksam gegen Stöße von unten, die beispielsweise schon dann auftreten können, wenn man das Sensorrohr in der Einbauarmatur zur Endpositionierung nach unten drückt.

Ferner ermöglicht die Schrägstellung der Endplatte 11 die Positionierung der Endplatten-Komponenten (Fenster und Reinigungseinrichtung) leeseitig, wenn eine Strömung im Meßmedium vorliegt oder sich ergibt, so daß Schmutzabsetzungen vermieden werden. Desgleichen gelingt es durch die Schrägstellung der Endplatte, daß aufkommende Luftblasen problemlos nach oben abperlen können, ohne daß ein sonst notwendiges Anwinkeln des gesamten Sensorkörpers erforderlich wird. Tatsächlich ist es nämlich durch die Schrägstellung ferner möglich, einen solchen Sensor in Einbauarmaturen in besonders einfacher Einbauform mittels rechtwinkliger T-Stücke auszuführen, wobei auch nicht, wie sonst notwendig, bei einem insgesamt schrägen Anstellwinkel für den Sensorkörper Aufweitungen im Durchflußrohr mit zusätzlicher aufwendiger Verrohrung (Y-Stücke) erforderlich sind.

Die Darstellung der Fig. 7 läßt im übrigen erkennen, daß sich auf diese Weise, also bei nunmehr möglichem senkrechten Einbau auf Reflexionen zurückzuführende Meßprobleme von selbst erledigen, da durch die einfache T-Stückmontage bei schräger Sensorfläche die üblichen Rohrleitungen selbst als Lichtfalle für den Sendestrahl A wirken, nachdem dieser sich mit dem Empfangsstrahl B gekreuzt hat. In Fig. 7 ist bei hier angenommener nur geringer Strömung der Einbau so getroffen, daß man in Querrichtung zum das Meßmedium führenden Rohr 18 auf die schräge Endplatte blickt, - man erkennt, daß der Sendestrahl A ohne mögliche störende Reflexionen in Längsrichtung des Rohrs 18 verschwindet, entgegen Empfangsstrahl B.

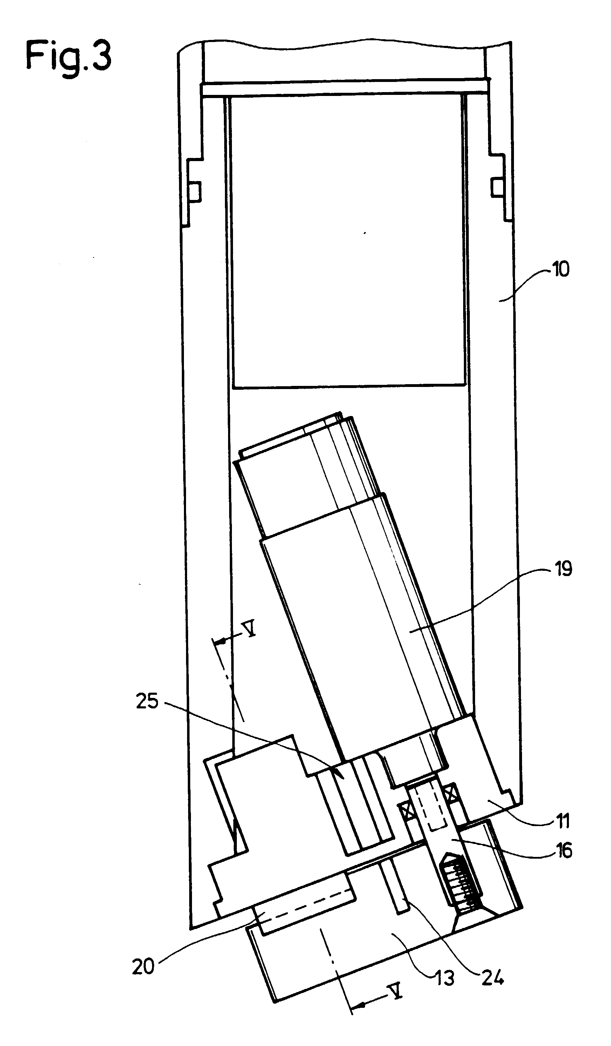

Die Darstellung der Fig. 3, die die Schrägstellung der Endplatte sowie die Wischerarmkonfiguration nicht maßstäblich zeigt, läßt erkennen, daß die Reinigungseinrichtung neben dem schon erwähnten Wischerarm 13 und seiner Lagerachse noch einen im Inneren des Sensorkörpers 10 gelagerten Antriebsmotor 19 umfaßt, der so angesteuert wird, daß der Wischarm 13 eine Reziprokbewegung, also eine hin- und hergehende Schwenkbewegung aus einer in Fig. 2 dargestellten Ruheposition durchführt, in welcher er die Fenster überstreicht. Zu Reinigungszwecken kann, wie Fig. 2 zeigt, dort, wo die Wischarmunterfläche die Fenster 14, 15 überstreicht, ein Schwamm, eine Gummilippe, ein Gummipolster oder ein sonstiges Reinigungskissen 20 noch angeordnet sein.

Die Ruheposition des Wischarms ist so wie in den Figuren 1 und 2 erkennbar orientiert, d.h. nach außen angrenzend zum Sendefenster 14, so daß, wie Fig. 1 deutlich zeigt, der Sendestrahl A vom Wischarm 13 abgewendet in die andere Richtung verläuft. Auf diese Weise werden auf dem Wischarm zurückzuführende Reflexionen vermieden.

Die Ansteuerung des antreibenden Elektromotors 19 erfolgt so, daß stets sichergestellt ist, daß der Wischarm bei seiner Schwenkbewegung beide Fenster 14, 15 überstreicht, bis seine rückwärtige Kante, wie in Fig.2 bei 13' gezeigt, außerhalb auch des Empfangsfensters 15 zu liegen kommt. Anschließend bewegt sich der Wischarm wieder rückwärts über die Fenster 14 und 15 bis in die in Fig. 2 gezeigte Position, die beispielsweise 27° außerhalb einer horizontalen Mittellinie der Endplatte 11 liegen kann, wobei dieser numerische Wert für die Erfindung nicht als einschränkend zu verstehen ist.

Um sicherzustellen, daß der Wischarm bei seiner Wischbewegung stets beide Fenster überläuft und in seine Ausgangsposition zurückkehrt, ist eine sinnreiche Ansteuerung unter Einbeziehung eines Reedrelaisschalters vorgesehen, die so wie in den Figuren 3 und 6 gezeigt aufgebaut ist.

Für die Bewegung des Wischarms ist ein Gleichstrommotor 19 vorgesehen, da dieser am am einfachsten durch Umpolen der zugeführten Speisespannung in seiner Drehrichtung umgesteuert werden kann. Es versteht sich natürlich, daß hier auch andere Motoren, beispielsweise Universalmotoren Verwendung finden können, wenn durch zusätzliche Schaltungsmittel für eine vergleichbare Funktion gesorgt ist, wie im folgenden erläutert.

Die ansteuernde, in ihrer Polarität jeweils umgesteuerte, insofern eine Art Rechteckversorgungsspannung darstellende Spannung für den Antrieb des Wischarms ist im kleinen Diagramm unterhalb der Fig. 6 gezeigt und umfaßt jeweils Periodendauern T, die so bemessen sind, daß sichergestellt ist, daß während einer positiven Halbschwingung, die am Eingangsanschluß E zugeführt wird, Versorgungsspannung über eine für positive Spannungen durchlässig gepolte Reihendiode 22 zum Motor 19 gelangt. Der Motor läuft daraufhin an und führt den Wischarm 13 über die beiden Fenster 14, 15 bis zu einer Position, in welcher sich der Wischarm zuverlässig außerhalb der Fensterorientierungen befindet. Anschließend schaltet die Versorgungsspannung um, wobei die Impulsdauer T einer einer Halbwelle an sich nicht kritisch ist und lediglich sichergestellt sein muß, daß diese so lange andauert, daß der Wischarm einen einen vorgegebenen äußeren Umkehrpunkt erreicht.

Durch die Polaritätsumkehr der Versorgungsspannung gelangt nunmehr die darauffolgende negative Halbwelle zum Motor, und zwar über einen Relaiskontakt 23 parallel zur Diode 22, der durch die vom Motor selbst veranlaßte Bewegung gesteuert lediglich in der Wischarmendlage, wie in Fig. 2 gezeigt, offen, sonst geschlossen ist.

Da sich der Wischarm bei anstehender negativen Versorgungsspannungs-Halbwelle in seiner ausgefahrenen Position befindet, ist der Schalter 23 geschlossen und durch die Reversierung des Motors 19 wird der Wischarm in seine Ausgangsposition zurückgeführt, in welcher der Schalter 23 als Reedkontakt öffnet. Daraufhin kommt der Motor zur Ruhe.

Der Reedschalter 23 wird dabei von dem Wischarm 13 selbst gesteuert, und zwar vorzugsweise mittels eines kleinen permanenten Stabmagneten 24, der ein ihm in der Ruheposition des Wischarms gegenüberliegendes, in der Endplatte 11 oder an sonstiger geeigneter Stelle angeordnetes Reedrelais 25, welches den Schalter 23 bildet, öffnet.

Auch wenn daher die negative Halbwelle noch andauert, bleit der Wischarm in seiner vorgegebenen Position durch Selbststeuerung stehen und beginnt einen neuen Wischzyklus erst dann wieder, wenn dem Motor über die polaritätsgerecht angeordnete Diode 22 erneut positive Halbwellen-Versorgungsspannung zugeführt wird, wodurch dann gleichzeitig auch der Schalter 23 des Readrelais 25 geschlossen wird, nach Anlauf.

Auf diese Weise ist sichergestellt, daß einerseits der Wischarm sich auf jeden Fall außerhalb der Einflußsphäre der Fenster 14, 15 befindet, wenn er zum Stillstand kommt, denn vorher kann das Reedrelais 25 nicht öffnen, wobei ein jeweiliger erneuter Vortrieb auch extern eingeleitet werden kann, wie überhaupt die verschiedenen, dem Motoranschluß E zugeführten Polaritäten der Speisespannung nicht aus einer Rechteckspannung abgeleitet sein müssen, sondern auch durch einfaches Umschalten manuell zugeführt werden können.

Es versteht sich, daß zwischen Wischarm und antreibendem Gleichstrommotor 19 ein Untersetzungsgetriebe geeigneter Bauart geschaltet sein kann.

Die Darstellung der Fig. 5, die einem Schnitt längs der Linie V-V der Fig. 3 entsprechen kann, zeigt schließlich noch die durch entsprechend seitlich angeschnittene Prismen in dem entsprechenden Abschnitt der Endplatte 11 gebildete Schrägkanäle, die nach unten aufeinanderzu laufen und in der Endplattenfläche die Fenster 14 für das Sendeprisma und 15 für das Empfangsprisma bilden. Die Sende-LED ist in Fig. 5 mit 25, die Empfangs-LED mit 26 und eine ergänzend noch vorgesehene Leistungskontrollfotodiode mit 27 bezeichnet; diese befindet sich angrenzend zur Sendediode 25 und empfängt über eine kleinere Öffnung von der Sendediode ausgehendes Licht, so daß die jeweilige Intensität der Sendediode in die Berechnung der Trübungsmessung mit einbezogen werden kann.

## Patentansprüche

1. Vorrichtung zur Erfassung von ein Primärsignal durch ihre Anwesenheit verändernden Einflußgrößen in der analytischen Chemie, insbesondere zur Trübungsmessung in wäßrigen Meßmedien, mit einem optischen Sender und einem zugeordneten Empfänger, der ein durch den Einfluß des Meßmediums verändertes Meßsignal erzeugt, dadurch gekennzeichnet, daß die den optischen Sender (25, 14') sowie den optischen Empfänger (26, 15') tragende Endplatte (11) des in das Meßmedium eintauchenden rohrförmigen Sensorkörpers (10) schräg zur Sensorkörperlängsachse angesetzt ist und daher auch schräg in das Meßmedium eintaucht.

2. Vorrichtung nach Anspruch 1, mit einer nach Art eines Scheibenwischers die Strahlaustrittsöffnungen (14, 15) von optischem Sender und optischem Empfänger reinigenden Einrichtung, wobei die einen Wischarm (13) der Reinigungsvorrichtung (12) tragende Achse (16) zur unteren sich aufgrund der schrägen Anordnung der Endplatte (11) spitzwinklig verjüngenden Randkante der Endplatte (11) entfernt in der mit Bezug auf die Einbauposition oberen Hälfte angeordnet ist, gegenüberliegend zu dem in der unteren Hälfte angeordneten Fenster (14, 15) für Sendestrahl (A, B), die von dem Wischarm (13) überstrichen sind.

3. Vorrichtung nach Anspruch 2, dadurch gekennzeichnet, daß Sendediode (25) und Empfangsdiode (26) aufnehmende Sende- und Empfangsprismen (14', 15') seitlich abgeflacht sind und mit ihren abgeflachten Seiten im Bereich der Fenster (14, 15) angrenzend in der Endplatte (11) angeordnet sind, wobei die Prismenhauptkörper zur Erzielung einer 90°-Überkreuzung von Sendestrahl (14) und Empfangsstrahl (15) im Meßmedium unter Einbeziehung jeweiliger Brechungsverhältnisse in den Übergangsbereichen einen vorgegebenen Winkel zueinander einschließen.

4. Vorrichtung nach einem der Ansprüche 2-3, dadurch gekennzeichnet, daß der von einem Antriebsmotor über seine Lagerachse (16) bewegte Wischarm (13) für eine vorgegebene Polarität der dem Antriebsmotor (19) zugeführten Speisespannung diese Stromzufuhr in seiner Ausgangsruheposition selbst unterbricht.

5. Vorrichtung nach einem der Ansprüche 2-4, dadurch gekennzeichnet, daß in der Ausgangsruheposition des Wischarms (13) durch einen von ihm getragenen Permanentmagneten ein in der Speisezuleitung zum als Gleichstrommotor ausgebildeten Antriebsmotor (19) liegender Schalter (23) eines Reedrelais (25) aufgesteuert und hierdurch die weitere Stromzufuhr unterbrochen wird, wobei parallel zum Schalter (23) des Reedrelais (25) eine lediglich für Versorgungsspannungen einer vorgegebenen Polarität durchlässige Diode (22) geschaltet ist, derart, daß ein Wischerarmanlauf bis zu einer ausgeschwenkten maximalen Endposition des Wischarms außerhalb der Fenster (14, 15) lediglich durch Zuführung einer Versorgungsspannung vorgegebener Polarität möglich ist, bei dann gleichzeitig erfolgendem Schließen des zur Diode (22) parallelen Schalters (23), wobei die Rückführung des Wischarms in seine Ruheposition durch Zuführung von Motorspeisespannung nunmehr entgegengesetzter Polarität so lange erfolgt, bis bei Sperren der Diode (22) der Wischarm den Reedrelaisschalter selbsttätig öffnet, so daß eine erneute Vortriebsphase auch extern durch die Wahl der Speisespannungspolarität einleitbar ist.

6. Vorrichtung nach einem der Ansprüche 2-5, dadurch gekennzeichnet, daß die Ruheposition des Wischarms angrenzend, jedoch außerhalb zum Fenster (14) des Sendeprismas (14') liegt, derart, daß der aus dem Sendefenster (14) austretende Sendestrahl (A) entgegengesetzt zur Wischarmruheposition verläuft.

7. Vorrichtung nach einem der Ansprüche 1-6, dadurch gekennzeichnet, daß bei aufgrund der durch die Schrägstellung der Endplatte (11) ermöglichten vertikalen Einbauposition des rohrförmigen Sensorkörpers (10) mittels einfacher rechtwinkliger Einbau-T-Stücke den Einbauort umgebende Rohrleitungen als Lichtfallen für den Senderstrahl (A) wirken, nach dessen angenäherter 90°-Überkreuzung mit dem Empfangsstrahl angrenzend zu den Fenstern (14, 15).

## Claims

1. A device for determining influencing variables in analytical chemistry which vary a primary signal by their presence, more particularly for measuring turbidity in aqueous test media, comprising an optical transmitter and an associated receiver which generates a measurement signal which is varied by the influence of the test medium, characterised in that the end plate (11) of the tubular sensor body (10) immersed in the test medium which carries the optical transmitter (25, 14') and also the optical receiver (26, 15') is fitted obliquely to the longitudinal axis of the sensor body and is therefore also immersed obliquely into the test medium.

2. A device according to claim 1, comprising an apparatus which cleans the beam exit apertures (14, 15) of the optical transmitter and the optical receiver in the manner of a windscreen wiper, the shaft (16) bearing a wiper arm (13) of the cleaning apparatus (12) being arranged remotely in relation to the lower marginal edge of the end plate (11), which tapers at an acute angle due to the oblique arrangement of the end plate (11), in the upper half thereof with respect to the installation position opposite the windows (14, 15) for the transmitter beam (A, B) which are arranged in the lower half and over which the wiper arm (13) sweeps.

3. A device according to claim 2, characterised in that transmitting and receiving prisms (14', 15') holding a transmitting diode (25) and a receiving diode (26) are flattened laterally and are arranged with their flattened sides juxtaposed in the end plate (11) in the region of the windows (14, 15), the main bodies of the prisms enclosing a predetermined angle between them to produce, with the prevailing indices of refraction in the transition regions included, a 90° cross-over of the transmitting beam (14) and the receiving beam (15) in the test medium.

4. A device according to one of claims 2 to 3, characterised in that the wiper arm (13) which is moved by a drive motor via its bearing shaft (16), to produce a predetermined polarity of the supply voltage supplied to the drive motor (19), itself interrupts this power supply in its initial inoperative position.

5. A device according to one of claims 2 to 4, characterised in that when the wiper arm (13) is in the initial inoperative position, a switch (23) of a reed relay (25), which is located in the supply line to the drive motor in the form of a direct current motor, is activated by a permanent magnet carried by the said wiper arm, and the continued power supply is thereby interrupted, a diode (22), parallel to the switch (23) of the reed relay (25), which will only let through supply voltages of a predetermined polarity, being switched in such a way that a wiper arm movement to a maximum end position of the wiper arm swivelled beyond the windows (14, 15) is only possible as a result of the supply of a supply voltage of predetermined polarity, the switch (23) which is parallel to the diode (22) then closing at the same time, whereupon the wiper arm is returned to its inoperative position as a result of a supply voltage which is now of the opposite polarity being supplied to the motor until, with the diode (22) blocked, the wiper arm automatically opens the reed relay switch, with the result that a fresh driving phase may also be initiated externally by the selection of the supply voltage polarity.

6. A device according to one of claims 2 to 5, characterised in that the inoperative position of the wiper arm is adjacent to but outside the window (14) of the transmitting prism (14') such that the transmitting beam (A) emerging from the transmitting window (14) extends in the opposite direction to the inoperative position of the wiper arm.

7. A device according to one of claims 1 to 6, characterised in that the pipelines, enclosing the installation location by means of simple right-angled installation T-pieces as a result of the vertical installation position of the tubular sensor body (10) which the oblique position of the end plate (11) makes possible, act as light traps for the transmitter beam (A) after its approximately 90° cross-over with the receiving beam adjacent to the windows (14, 15).

## Revendications

1. Appareil utilisé en chimie analytique pour détecter des grandeurs dont la présence modifie un signal primaire, en particulier pour mesurer la turbidité de milieux aqueux, comportant un émetteur optique associé à un récepteur qui délivre un signal de mesure modifié par l'influence du milieu de mesure,
caractérisé en ce que
la plaque terminale (11) qui porte l'émetteur optique (25, 14') ainsi que le récepteur optique (26, 15'), plaque terminale du corps tubulaire du détecteur (10) plongeant dans le milieu de mesure, inclinée par rapport à l'axe longitudinal de ce corps et par conséquent également immergée obliquement dans le milieu.

2. Appareil selon la revendication 1, équipé d'un dispositif du genre essuie-glace effectuant le nettoyage des orifices de passage des rayons lumineux (14, 15) de l'émetteur optique et du récepteur optique dans lequel l'axe (16) portant un bras d'essuyage (13) du dispositif de nettoyage (12) est situé en dessous et, du fait de l'inclinaison de la plaque d'extrémité (11) se trouve loin du bord en pointe aiguë de cette plaque et dans la moitié supérieure de celle-ci en position d'utilisation, tandis qu'à l'opposé, dans la partie inférieure de la plaque, se trouvent les fenêtres (14, 15) que traverse le rayonnement émis (A, B) et qui sont balayées par le bras d'essuyage (13).

3. Appareil selon la revendication 2,
caractérisé en ce que
des prismes d'émission et de réception (14', 15') dans lesquels sont logées la diode émettrice (25) et la diode réceptrice (26) présentent latéralement des faces aplaties qui, dans la zone des fenêtres (14, 15) se trouvent au niveau de la plaque d'extrémité (11), les corps principaux des prismes faisant entre eux un angle défini de manière à obtenir, à l'intérieur du milieu de mesure, le croisement à 90° du rayonnement émis (14) et du rayonnement reçu (15) compte tenu des conditions de réfraction dans les zones de passage.

4. Appareil selon une des revendications 2 et 3,
caractérisé en ce que
le bras d'essuyage (13) mobile par l'intermédiaire de son axe (16) relié à un moteur d'entraînement, pour une polarité donnée du courant alimentant le moteur d'entraînement (19) coupe lui-même l'arrivée du courant au moteur, dans sa position initiale de repos.

5. Appareil selon une des revendications 2 à 4,
caractérisé en ce que
dans la position initiale de repos du bras d'essuyage (13) un aimant permanent porté par ce bras ouvre un contacteur (23) d'un relais Reed (25), monté sur le conducteur d'alimentation du moteur d'entraînement du type à courant continu et de ce fait interrompt l'arrivée du courant, tandis qu'en parallèle avec le contacteur (23) du relais Reed (25), une diode (22) perméable seulement à des tensions d'alimentation d'une polarité donnée, est connectée de manière qu'une course du bras d'essuyage jusqu'à une position extrême maximale dans laquelle ce bras est à l'extérieur des fenêtres (14, 15), n'est possible que par l'application d'une tension d'alimentation d'une polarité donnée, avec alors fermeture simultanée du contacteur (23) monté en parallèle avec la diode (22), le retour du bras d'essuyage à sa position de repos étant produit par introduction à l'alimentation du moteur d'une tension de polarité opposée, jusqu'à ce que par fermeture de la diode (22) le bras d'essuyage ouvre automatiquement le relais Reed, de manière qu'une nouvelle phase de mouvement peut être engagée également de l'extérieur par le choix de la polarité de la tension d'alimentation.

6. Appareil selon une des revendications 2 à 5,
caractérisé en ce que
la position de repos du bras d'essuyage se trouve au bord, mais toutefois à l'extérieur de la fenêtre (14) du prisme d'émission (14') de manière que le rayonnement (A) sortant de la fenêtre d'émission (14) se trouve dirigé à l'opposé de la position de repos du bras d'essuyage.

7. Appareil selon une des revendications 1 à 6,
caractérisé en ce que
du fait que la position oblique de la plaque d'extrémité (11) permet de monter verticalement le corps tubulaire de détecteur (10) au moyen de simples pièces rectangulaires de montage en T, des conduites tubulaires entourant le lieu de montage jouent le rôle de pièges à lumière pour le rayonnement d'émission (A), après croisement à 90° environ de ce rayonnement avec le rayonnement recueilli, près des fenêtres (14,15).
